Europäisches Patentamt

(19) European Patent Office

Office européen des brevets

(11) Publication number: **0 177 854**
**B1**

(12) **EUROPEAN PATENT SPECIFICATION**

(45) Date of publication of the patent specification:
06.12.89

(51) Int. Cl.⁴: **G10L 5/04**

(21) Application number: 85112261.4

(22) Date of filing: 27.09.85

(54) Keyword recognition system using template-concatenation model.

(30) Priority: 28.09.84 US 655958

(43) Date of publication of application:
16.04.86 Bulletin 86/16

(45) Publication of the grant of the patent:
06.12.89 Bulletin 89/49

(84) Designated Contracting States:
AT DE FR GB NL

(73) Proprietor: International Standard Electric Corporation,
320 Park Avenue, New York New York 10022(US)

(72) Inventor: Higgins, Alan Lawrence, 10611 Oakbend Dr.,
San Diego, CA 92131(US)
Inventor: Wohlford, Robert E., 12832 Stone Canyon Rd.,
Poway, CA 92064(US)
Inventor: Bahler, Lawrence George, 3843 Ingraham St.,
San Diego, CA 92109(US)

(74) Representative: Klunker . Schmitt-Nilson . Hirsch,
Winzererstrasse 106, D-8000 München 40(DE)

(56) References cited:
IBM TECHNICAL DISCLOSURE BULLETIN, vol. 23,
no. 7B, December 1980, pages 3464-3465, New York, US;
L.R. BAHL et al.:
"Language-model/acoustic-channel-model balance
mechanism"
IEEE TRANSACTIONS ON ACOUSTICS, SPEECH, AND
SIGNAL PROCESSING, vol. ASSP-25, no. 5,
October 1977, pages 361-367, IEEE, New York, US; R.W.
CHRISTIANSEN et al.: "Detecting and locating key
words in continuous speech using linear predictive
coding"
ICASSP 85 PROCEEDINGS, Tampa, Florida,
March 26-29, 1985, pages 1233-1236; IEEE, New York,
US, A. L. HIGGINS et al.: "Keyword recognition using
template concatenation."
RADIO AND ELECTRONIC ENGINEER, vol. 53, no. 4,

(56) References cited: (continuation)
April 1983, pages 166-175; IERE Crown Copyright
Reserved, London, GB, J.S. BRIDLE et al.: "Continuous
connected word recognition using whole word
templates"

ACTORUM AG

## Description

This invention relates to a system for recognising keywords in incoming or observed speech.

Know keyword recognition systems, such as described in the publication "An Efficient Elastic-Template Method for Detecting Given Words in Running Speech", J.S. Bridle, British Acoustical Society Spring Meeting, pages 1–4, April 1973, derive elastic-templates from a parametric representation of spoken examples of the keywords to be detected. A similar parametric representation of the incoming speech is continually compared with these templates to measure the similarity between the speech and the keywords from which the templates were derived. A keyword is said to have been spoken when a segment of the incoming speech is sufficiently similar to the corresponding template. The keyword templates are termed elastic because they can be either expanded or compressed in time to account for variations in talking speed and pronunciation.

Systems employing the known methods frequently give false indications or alarms that keywords have been spoken. These false alarms occur when the incoming speech contains acoustic patterns that are similar to those of the keywords. The frequency of false alarms depends upon the uniqueness in the language of the keyword acoustic patterns. Another shortcoming is that systems employing the known methods reqauire a large amount of computational power. Furthermore, the nature of these methods makes it difficult to implement practical systems that operate in real time. All of these shortcomings have restricted the development of keyword recognition systems for practical applications.

A known continuous speech recognition system as described in the publication "Continuous Connected Word Recognition Using Whole Word Templates", J.S. Bridle et al, RADIO AND ELECTRONIC ENGINEER, vol. 53, no. 4, April 1983, pages 166–175, uses whole word templates for the words of a defined vocabulary to be recognised by the system, and in addition a "pseudo-template" or "wild card" template which always produces the same distance when matched with any frame of the incoming speech. It is the aim of this known system to recognise all words of a phrase. However, speech can include spurious inputs, such as breath noises and unknown or out-off-context words which do not belong to the defined vocabulary. By incorporating the "wild card" template into the syntax, such spurious inputs can be matched and rejected at particular points in the syntax.

It is a problem underlying the invention to provide a system for recognising keywords occurring in continuously-spoken speech, resulting in a high rate of correct indications that keywords have been spoken.

The solution is a system for recognising keywords in observed speech, comprising means for storing keyword templates, means for storing filler templates derived from arbitrary utterance long enough to contain a sample of the sound occuring in a language, means for deriving concatenated sequences of any of said stored templates, means for determining which of said concatenated sequences best matches the observed speech and means for detecting and identifying any keywords present in the best matching concatenated sequence.

The invention is directed to a system employing a method that detects the occurrence of keywords in continuously-spoken speech. The method of the invention employs a more powerful decision procedure than known methods. The disclosed decision procedure evaluates both the keyword hypothesis, and the alternative hypothesis that the observed speech is not a keyword. A novel language model is used to evaluate the latter hypothesis. Arbitrary utterances of the language, according to this model, are approximated by concatenations of a set of filler templates. The disclosed system allows for automatic detection of the occurrence of keywords in unrestricted natural speech. The system can be trained by a particular speaker, or can function independently of the speaker.

The principles of the invention will be more fully appreciated from the illustrative embodiments in the drawings, in which:

Figure 1 shows a block diagram of a general embodiment of keyword recognition system, according to the invention; and

Figure 2 shows a block diagram of a general embodiment of the filler template derivation means shown in Fig. 1.

A keyword recognition or wordspotting system employing the invention employs a model for all speech in the language, not only for the keywords. The method of the invention continually measures the similarity between the incoming speech and elastic templates derived from the keywords, as in known methods. In addition, it measures the similarity between the incoming speech and the general language model. A keyword is said to be detected when the similarity to the keyword template is sufficiently greater than the similarity to the general language model.

The general language model consists of a set of, for example, between 50 and 500 short segments of previously-recorded speech derived from a training utterance. These segments are referred to as filler templates. They are chosen with the goal of covering the acoustical space used by a speaker of the language. This is done, for example, by a segmentation and statistical clustering analysis of the training utterance. Their duration lies in the range between the duration of phonemes and the duration of syllables. Arbitrary utterances of the language, according to the model, are approximated by concatenations of the filler templates, with no restrictions on their order. The use of filler templates as a general language model is a unique feature of this invention.

The invention is implemented using a modified continuous speech recognition (CSR) system with no syntax constraints. The CSR system uses the combination of keyword templates and filler templates, and determines the sequence of concatenated templates that best matches the input speech. A CSR system can be employed such as is disclosed in EP-A-0 108 354.

In near-ideal, that is, near-zero error-rate operation, keyword templates match the spoken keywords, and filler templates match all the remaining speech. A keyword is declared to have been spoken when the keyword template appears in the best-matching template sequence.

The invention can employ existing CSR systems, with a modification that each time a new template is concatenated to a partial template string, a fixed penalty is added to the partial string score. Viewing the filler templates as the states of a Markov model, the concatenation penalty is analogous to a log transition probability. Using fixed penalties is equivalent to assuming that all transitions are equally probable. The value of the penalty is therefore inversely proportional to the log of the number of filler templates. Also, with regard to the relative durations of the filler and keyword templates, applying a positive concatenation penalty increases the likelihood of recognizing long templates, or keywords, relative to short templates, or fillers, since fewer penalties are incurred. The penalty thus provides a means of adjusting the operating point of the system without modifying the filler template set.

The invention addresses the shortcomings of the known methods by employing a more powerful decision procedure for keyword detection. Whereas the known methods estimate the conditional probability of the acoustic data given the keyword, the invention estimates the conditional probability of the keyword given the acoustic data. The latter quantity is the information that is needed for keyword detection. The invention eliminates redundant calculations that were performed in the known methods. The increased efficiency reduces the required computation by an order of magnitude.

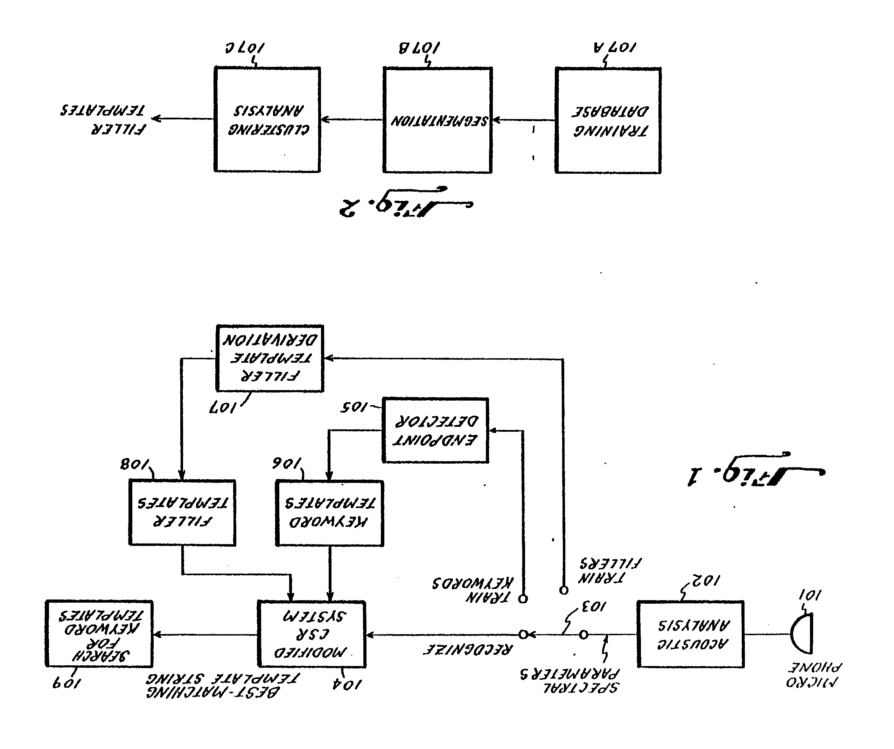

A block diagram of the keyword recognition system is shown in Figure 1. Input speech from the microphone 101 is provided to the input of an acoustic analyzer 102, which divides the speech into short frames, and provides a parametric representation of each frame at its output. The particular type of acoustic analysis performed by the acoustic analyzer is not critical to the invention, and known acoustic analyzers may be employed such as that disclosed in the aforementioned EP-A-0108354. For example, a 16-channel bandpass filterbank analysis, with a frame size of 10 milliseconds, may be employed. These spectral parameters are processed in one of three ways, depending upon the mode of system operation, selected by selector switch 103. The three modes are Recognize mode, Train Keywords mode, and Train Filler Templates mode.

In Recognize mode, the spectral parameter output of the acoustic analyzer is provided to the input of the modified CSR system 104. The CSR algorithm performed by the CSR system is not critical to the invention, except for the modification described previously. The modification CSR system determines the concatenated sequence of stored filler and keyword templates that best matches the incoming speech to be recognized. The output of the modified CSR system is a string of template labels in which each label represents one template in the best-matching template sequence. For example, each template may be assigned a number and the label may be a multi-bit representation of that number. This output is provided to a keyword template search sub-system 109 which, for example, where there is a multi-bit representation, may be a multi-bit comparator with a storage device for keyword template labels, comparing each incoming template label with the stored keyword template labels. The sub-system can then provide an indication that a keyword has been spoken, as well as an indication as to which keyword was spoken.

In Train Keywords mode, the user speaks each keyword in isolation and the spectral parameter output of the acoustic analyzer is provided to the input of, for example, an energy-based endpoint detector 105, such as the detector referred to in the aforementioned EP-A-0108354.

The endpoints of the keyword are determined by the endpoint detector. The spectral parameters of each keyword are then placed in keyword templates storage 106. In Train Filler Templates mode, the user speaks any arbitrary utterance long enough to contain a reasonable sampling of sounds in the language. A paragraph of read text is suitable, and it need not contain the keywords. The string of spectral parameters provided at the output of the acoustic analyzer is provided to the input of a filler template derivation sub-system 107 and the derived filler templates are stored in filler templates storage 108. The filler template derivation sub-system divides the string of spectral parameters into short segments which are used as filler templates.

One method to accomplish the task of filler template derivation is to hand-mark syllables of the training utterance by visual inspection of a spectrogram of the utterance. The resultant segments approximately correspond to syllables, and a set of them are chosen with the objective of representing a wide variety of different sounds and stored in the filler templates storage.

Another method to accomplish the task of filler template derivation is automatic and uses a two-stage procedure. Speech data from the training utterance is first divided into segments. These segments are then applied as input for statistical clustering analysis, which selects a subset of the segments that maximizes a mathematical function based on a measure of distance between segments. The segments belonging to the selected subset are used as filler templates. This method of deriving filler templates is illustrated in Figure 2. The performance of these two methods of deriving filler templates appears to be nearly equal, indicating that the method of selecting filler templates may not be critical. The automatic method can be implemented in a number of ways that differ in the techniques used for segmentation and statistical clustering analysis. The methods used for segmentation and statistical clustering analysis are not critical, and good performance can be obtained using an equal-length segmentation and a basic covering-analysis.

In one method for performing the segmentation, the training database 107A provided from the output of the acoustic analyzer is divided into equal-length segments, for example, 100 milliseconds, by segmentation circuit 107B. In another method for performing the segmentation, the segments have unequal lengths, and the segmentation boundaries are chosen on the basis of measurements of the rate of spectral change. Other algorithms can be devised to accomplish this type of segmentation, but the objective is to create short segments where the spectrum is changing quickly and longer segments where the spectrum is changing slowly.

In still another method for performing the segmentation, a set of prototype segments derived from the speech of a large set of speakers is employed. The prototype segments are used as templates and matched, using a CSR system, to the training utterance. Segment boundaries are marked between frames of the test utterance that are matched to boundaries between the concatenated prototype segments.

Statistical clustering analysis is performed by statistical clustering analyzer 107C and is employed to choose a set of output segments that is relatively representative of the large set of input segments supplied by the segmentation procedure. One method of performing the statistical clustering analysis is to select the output segments so as to minimize the average distance between input segments and their nearest output segments, by employing the known K-Means algorithm as disclosed in the statistics literature. Another method of performing the statistical clustering analysis, also known as covering-analysis, selects a set of segments that covers the training data by selecting the output segments so as to guarantee that the distance between any input segment and the closest output segment is less than a specified tolerance. The density of the training data in the vicinity of each selected segment is then computed, and a further selection is made of the segments for which the density is greatest. For example, in one method of covering-analysis, the first input segment is declared to be an output segment. Then each subsequent input segment is compared with all the output segments, initially only one. If the distance to the nearest output segment is greater than the specified tolerance, then that input segment is added to the set of output segments. In both the K-Means and covering-analysis methods, the measure of distance between segments that are used is the average squared-Euclidean distance between corresponding frames of the segments.

It is beneficial but not necessary to augment the set of filler templates derived using the aforementioned procedure by creating additional filler templates from segments of the keyword templates. For example, this can be done by dividing each keyword template into equal-length segments whose duration is roughly equal to the average duration of the filler templates. The keyword segments are used directly as additional filler templates, with several filler templates produced from each keyword template.

The invention may be employed for the control of machine operation using spoken commands or control words. For example, the invention could be employed for the placing of phone calls by voice, for the voice-control of office equipment, such as text editors, and for the voice-control of toys.

Another application is in continuous speech recognition systems using relaxed syntactic constraints. Existing CSR systems require phrases to be spoken with a highly-restricted syntax. In many applications, however, the intent of the message is carried by a small subset of the words. In these applications, decoding of the message can be guided by recognition of the keywords. The user need not constantly refer to a complicated graph showing permissible word orders. Such a capability would be particularly valuable in systems that depend upon man-machine dialogs.

The invention may also be employed for automated airline reservation systems, computer-aided instruction systems, and information retrieval systems. A further application of the invention is for the automatic extraction of the gist of conversations. A still further application is for the automatic extraction of reference templates from naturally-spoken phrases, for use in speech-recognition systems, and for the automatic updating of reference templates in continuous speech-recognition systems.

## Claims

1. A system for recognizing keywords in observed speech, comprising:
   - means (106) for storing keyword templates;
   - means (108) for storing filler templates derived from an arbitrary utterance long enough to contain a sample of the sounds occuring in a language;
   - means (104) for deriving concatenated sequences of any of said stored templates;
   - means (104) for determining which of said concatenated sequences best matches the observed speech; and
   - means (109) for detecting and identifying any keywords present in the best matching concatenated sequence.

2. A system as claimed in claim 1, wherein said determining means includes:
   means (104) for adding, when an unconcatenated template is con catenated to a partial template string, a fixed penalty to a score of said partial template string.

3. A system as claimed in any one of the preceding claims, com prising:
   - input means (101), for inputting observed speech
   - and means (102), for converting the observed speech to a parametric representation of the observed speech,
   - the determining means (104) determining which of said concatenated sequences best matches the parametric representation of said observed speech presented at said input means (101).

4. A system as claimed in claim 3, further comprising: means (107), coupled to said filler template storing means (108) for deriving said filler templates and means (105) coupled to said keyword template storing means (106) for deriving said keyword templates.

5. A system as claimed in claim 4, wherein said filler template deriving means (107) comprises:
 – means (107B) for segmenting an arbitrary training utterance, and
 – means (107C), coupled to said segmenting means, for performing a statistical clustering analysis of said segments to select a subset of said segments as filler templates.

6. A system as claimed in claim 4, wherein said keyword template deriving means (105) comprises:
 – means (104), coupled to said input means (101) for providing a parametric representation of at least one keyword, and means (105) for determining endpoints of said representation.

7. A system as claimed in any of the preceding claims, wherein the filler templates have a duration in the range between the duration of phonemes and the duration of syllables.

8. A system as claimed in any of the preceding claims, wherein the filler templates storing means (108) stores between 50 and 500 short segments of previously recorded speech derived from a training utterance.

9. A system as claimed in any of claims 2 to 8, wherein the value of the fixed penalty is inversely proportional to the log of the number of filler templates.

**Patentansprüche**

1. System zur Erkennung von Schlüsselworten in geäußerter Sprache, mit:
 – einer Einrichtung (106) zum Speichern von Schlüsselwort-Sprachmustern;
 – einer Einrichtung (108) zum Speichern von Füllelement-Sprachmustern, die von einer beliebigen Äußerung mit einer solchen ausreichenden Länge abgeleitet sind, daß sie ein Muster der in einer Sprache vorkommenden Laute enthält;
 – einer Einrichtung (104) zur Ableitung verketteter Sequenzen eines jeglichen gespeicherten Sprachmusters;
 – einer Einrichtung (104) zum Bestimmen, welche der verketteten Sequenzen am besten zu der geäußerten Sprache paßt; und
 – einer Einrichtung (109) zum Detektieren und Identifizieren jeglicher Schlüsselworte, die in der am besten passenden, verketteten Sequenz enthalten sind.

2. System nach Anspruch 1, bei dem die Bestimmungseinrichtung aufweist: eine Einrichtung (104), die bei Verkettung eines nicht verketteten Sprachmusters mit einer partiellen Sprachmusterkette eine festgelegte Strafe zu einer Punktzahl der partiellen Sprachmusterkette hinzuaddiert.

3. System nach einem der vorausgehenden Ansprüche, mit:
 – einer Eingabeeinrichtung (101) für die Eingabe geäußerter Sprache,
 – und einer Einrichtung (102) zum Umwandeln der geäußerten Sprache in eine Parameterdarstellung der geäußerten Sprache,
 – wobei die Bestimmungseinrichtung (104) bestimmt, welche der verketteten Sequenzen am besten zu der Parameterdarstellung der an der Eingabeeinrichtung (101) vorhandenen geäußerten Sprache paßt.

4. System nach Anspruch 3, das außerdem aufweist: eine mit der Füllelement-Sprachmuster-Speichereinrichtung (108) gekoppelte Einrichtung zum Ableiten der Füllelement-Sprachmuster, sowie eine mit der Schlüsselwort-Sprachmuster-Speichereinrichtung (106) gekoppelte Einrichtung (105) zum Ableiten der Schlüsselwort-Sprachmuster.

5. System nach Anspruch 4, bei dem die Einrichtung (107) zum Ableiten der Füllelement-Sprachmuster aufweist:
 – eine Einrichtung (107B) zum Segmentieren einer beliebigen Übungs-Äußerung, und
 – eine mit der Segmentiereinrichtung gekoppelte Einrichtung (107C) zur Durchführung einer statistischen Gruppierungsanalyse der Segmente zur Auswahl einer Teilmenge der Segmente als Füllelement-Sprachmuster.

6. System nach Anspruch 4, bei dem die Einrichtung (105) zum Ableiten der Schlüsselwort-Sprachmuster aufweist:
 – eine mit der Eingabeeinrichtung (101) gekoppelte Einrichtung (104) zur Schaffung einer Parameterdarstellung wenigstens eines Schlüsselworts, sowie eine Einrichtung (105) zum Bestimmen von Endpunkten der Darstellung.

7. System nach einem der vorausgehenden Ansprüche, bei dem die Füllelement-Sprachmuster eine Dauer im Bereich zwischen der Dauer von Phonemen und der Dauer von Silben besitzen.

8. System nach einem der vorausgehenden Ansprüche, bei dem die Füllelement-Sprachmuster-Speichereinrichtung (108) zwischen 50 und 500 kurze Segmente, von zuvor aufgezeichneter Sprache speichert, die von einer Übungs-Äußerung abgeleitet ist.

9. System nach einem der Ansprüche 2 bis 8, bei dem der Wert der festgelegten Strafe zu dem Logarithmus aus der Anzahl der Füllelement-Sprachmuster umgekehrt proportional ist.

**Revendications**

1. Système de reconnaissance de mots-clé dans de la parole observée, comportant:
 – des moyens (106) de mémorisation de gabarits de mots-clé,
 – des moyens (108) de mémorisation de gabarits de remplissage dérivés d'une émission arbitraire suffisamment longue pour contenir un échantillon des sons apparaissant dans un langage,
 – des moyens (104) pour dériver des séquences enchaînées de certains des gabarits mémorisés,
 – des moyens (104) de détermination de celle desdites séquences enchaînées qui correspond le mieux à la parole observée, et
 – des moyens (109) de détection et d'identification de mots-clé présents dans la séquence enchaînée correspondant le mieux.

2. Système selon la revendication 1, dans lequel lesdits moyens de détermination comprennent:
 des moyens (104) d'addition, lorsqu'un gabarit non enchaîné est enchaîne avec une chaîne de gabarits partielle de pénalité fixe à une marque de ladite chaîne de gabarits partielle.

3. Système selon l'une quelconque des revendications précédentes, comportant:

– des moyens d'entrée (101) pour l'entrée de la parole observée,

– et des moyens (102) pour convertir la parole observée en une représentation paramètrique de la parole observée,

– les moyens de détermination (104) déterminant celle desdites séquences enchaînées qui correspond le mieux à la représentation paramètrique de ladite parole observée présentée auxdits moyens d'entrée (101).

4. Système selon la revendication 3, comportant en outre:

des moyens (107) couplés avec lesdits moyens de mémorisation de gabarits de remplissage (108) pour dériver lesdits gabarits de remplissage et des moyens (105) couplés avec lesdits moyens de mémorisation de gabarits de mots-clé (106) pour dériver lesdits gabarits de mots-clé.

5. Système selon la revendication 4, dans lequel lesdits moyens de dérivation de gabarits de remplissage (107) comportent:

– des moyens (107B) pour segmenter une séquence arbitraire de formation, et

– des moyens (107C) couplés avec lesdits moyens de segmentation pour effectuer une analyse par groupage statistique desdits segments afin de sélectionner un sous-ensemble desdits segments comme des gabarits de remplissage.

6. Système selon la revendication 4, dans lequel lesdits moyens de dérivation de gabarits de mots-clé (105) comportent:

– des moyens (104) couplés avec lesdits moyens d'entrée (101) pour fournir une représentation paramétrique d'au moins un mot-clé et des moyens (105) pour déterminer les points d'extrémité de ladite représentation.

7. Système selon l'une quelconque des revendications précédentes, dans lequel les gabarits de remplissage ont une durée dans la plage comprise entre la durée des phonèmes et la durée des syllabes.

8. Système selon l'une quelconque des revendications précédentes, dans lequel les moyens de mémorisation de gabarits de remplissage (108) mémorisent entre 50 et 500 courts segments de la parole précédemment enregistrée, dérivée d'une émission de formation.

9. Système selon l'une quelconque des revendications 2 à 8, dans lequel la valeur de la pénalité fixe est inversement proportionnelle au logarithme du nombre des gabarits de remplissage.

Fig. 1

Fig. 2